(19) Europäisches Patentamt
European Patent Office
Office européen des brevets

(11) **EP 4 583 212 A1**

(12) **EUROPEAN PATENT APPLICATION**
published in accordance with Art. 153(4) EPC

(43) Date of publication:
**09.07.2025 Bulletin 2025/28**

(21) Application number: 23907553.4

(22) Date of filing: **12.12.2023**

(51) International Patent Classification (IPC):
*H01M 8/106* (2016.01)   *H01M 8/1039* (2016.01)
*H01M 8/1067* (2016.01)   *H01M 8/1081* (2016.01)
*H01M 8/18* (2006.01)   *H01M 8/10* (2016.01)

(52) Cooperative Patent Classification (CPC):
**H01M 8/10; H01M 8/1039; H01M 8/106;
H01M 8/1067; H01M 8/1081; H01M 8/18**

(86) International application number:
**PCT/KR2023/020437**

(87) International publication number:
**WO 2024/136267 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.12.2022 KR 20220178228**

(71) Applicants:
• **W-Scope Korea Co., Ltd.
Cheongju-si, Chungcheongbuk-do 28122 (KR)**
• **W-Scope Chungju Plant Co., Ltd.
Daesowon-myeon
Chungju-si, Chungcheongbuk-do
27461 (KR)**

(72) Inventors:
• **PARK, Chang Dae
Chungcheongbuk-do 28115 (KR)**
• **JUNG, Myung Su
Daejeon 34322 (KR)**
• **JEONG, Sang Hyun
Cheongju-si, Chungcheongbuk-do 28121 (KR)**
• **KIM, Jeong Rae
Seoul 03454 (KR)**
• **YOON, Kyung Seok
Cheongju-si, Chungcheongbuk-do 28761 (KR)**
• **RYU, Kyoung Sun
Cheongju-si, Chungcheongbuk-do 28113 (KR)**

(74) Representative: **BCKIP Part mbB
MK1
Landsbergerstraße 98, 3.Stock
80339 München (DE)**

(54) **POLYMER ELECTROLYTE MEMBRANE AND PREPARATION METHOD THEREFOR**

(57)   One aspect of the present invention provides a polymer electrolyte membrane including: a porous substrate including a first part including a first polyolefin modified with a halogen-based compound, and a second part including a second polyolefin; and a halogen-based polymer electrolyte impregnated in pores of the porous substrate, wherein in the porous substrate, the first part and the second part constitute a discontinuous phase and a continuous phase, respectively, and a content of the halogen-based compound in the porous substrate is 0.5 to 10 wt%, and a method of manufacturing the same.

EP 4 583 212 A1

## Description

[Technical field]

The present invention relates to a polymer electrolyte membrane and a method of manufacturing the same, and more specifically, to a polymer electrolyte membrane in which a polymer electrolyte is impregnated into a porous substrate and the affinity between the polymer electrolyte and the porous substrate and the physical properties thereof are improved, and a method of manufacturing the same.

[Background Art]

Polymer electrolyte membranes increase energy conversion efficiency in electrochemical processes by increasing ionic conductivity and lowering resistance. As these polymer electrolyte membranes, single membranes made only of polymers, that is, polymer electrolytes with ion-exchange functional groups, are being applied in various fields such as fuel cells, redox flow batteries, electrodialysis, water electrolysis, water treatment, and seawater desalination.
However, since the ion-exchange functional group of the polymer electrolyte constituting this single membrane has a high affinity for water, there is a problem that the volume of the polymer electrolyte expands, thereby reducing the mechanical strength and resistance to decomposition of the membrane. To compensate for this problem, attempts have been made to introduce hydrophobic materials or structures that can supplement the mechanical strength of polymer electrolytes or to increase the thickness of the membrane, but in these cases, there is a problem that the overall efficiency of the system is lowered due to the loss of resistance.
To solve this problem, there has been proposed a thin-film reinforced composite membrane that can reduce and suppress swelling and resistance loss of the polymer electrolyte by using a hydrophobic substrate (or support) to fix and support the polymer electrolyte while imparting sufficient ion exchange capacity to the polymer electrolyte itself. Through this, the membrane can be made thin overall according to the thickness of the hydrophobic substrate, and sufficient tensile strength can be secured compared to conventional single membranes, thereby improving durability and process efficiency.
However, since the hydrophobic substrate and polymer electrolyte having different material properties have very low mutual affinity, there is a problem that the polymer electrolyte impregnated and fixed to the hydrophobic substrate is randomly separated, peeled, or delaminated, and there is a problem that randomly formed water bubbles and/or air bubbles inhibit the movement of substances, causing an increase in voltage or a decrease in current efficiency.

[Disclosure]

[Technical Problem]

The present invention is intended to solve the above-described problems of the related art, and the purpose of the present invention is to provide a polymer electrolyte membrane in which the impregnability, adhesion, and physical properties of a polymer electrolyte for a hydrophobic substrate are implemented in a balanced manner and improved by increasing the affinity between the hydrophobic substrate and the polymer electrolyte, and a method of manufacturing the same.

[Technical Solution]

One aspect of the present invention provides a polymer electrolyte membrane including: a porous substrate including a first part including a first polyolefin modified with a halogen-based compound, and a second part including a second polyolefin; and a halogen-based polymer electrolyte impregnated in pores of the porous substrate, wherein in the porous substrate, the first part and the second part constitute a discontinuous phase and a continuous phase, respectively, and a content of the halogen-based compound in the porous substrate is 0.5 to 10 wt%.
In one embodiment, the halogen-based compound and the halogen-based polymer electrolyte may include at least one common element.
In one embodiment, the common element may be fluorine (F).
In one embodiment, the halogen-based compound may be an alkene-based fluorocarbon.
In one embodiment, the halogen-based polymer electrolyte may be a perfluorosulfonic acid-based polymer.
In one embodiment, a weight average molecular weight (Mw) of the first and second polyolefins may each be 200,000 to 1,000,000.
In one embodiment, a weight average molecular weight (Mw) of the first polyolefin may be 30,000 to 100,000, and a weight average molecular weight (Mw) of the second polyolefin may be 200,000 to 1,000,000.

In one embodiment, the first and second polyolefins may each include one selected from the group consisting of polyethylene, polypropylene, polybutylene, polymethylpentene, and combinations of two or more thereof.

In one embodiment, the polymer electrolyte membrane may satisfy at least one of the following conditions (i) to (v):

(i) an ion exchange capacity (A) of 0.95 to 1.50 meq/g; (ii) an ionic conductivity (B) of 0.10 to 0.15 $S \cdot cm^{-1}$; (iii) a water uptake of 25 to 35%; (iv) a ratio of ionic conductivity to ion exchange capacity (B/A) of 0.095 to 0.150 $S \cdot cm^{-1} \cdot meq^{-1} \cdot g$; and (v) a thickness of 50 $\mu$m or less.

Another aspect of the present invention provides a method of manufacturing the above-described polymer electrolyte membrane, including: (a) manufacturing a porous substrate including a first part including a first polyolefin modified with a halogen-based compound, and a second part including a second polyolefin; (b) dissolving a halogen-based polymer electrolyte in a solvent to prepare an electrolyte solution; and (c) impregnating the porous substrate with the electrolyte solution.

In one embodiment, step (a) may include (a1) reacting the halogen-based compound and the first polyolefin in the presence of an initiator to prepare a masterbatch; and (a2) processing a composition including the masterbatch, the second polyolefin, and a pore-forming agent to manufacture the porous substrate.

In one embodiment, step (a) may include (a1') mixing a polyolefin, a halogen-based compound, an initiator, and a pore forming agent and allowing the polyolefin, the halogen-based compound, the initiator, and the pore forming agent to react in-situ to prepare a composition including the first polyolefin modified with the halogen-based compound as a portion of the polyolefin and the second polyolefin as a remainder of the polyolefin; and (a2') processing the composition to manufacture the porous substrate.

[Advantageous Effects]

A polymer electrolyte membrane according to one aspect of the present invention includes a porous substrate including a first part including a first polyolefin modified with a halogen-based compound, and a second part including a second polyolefin; and a halogen-based polymer electrolyte impregnated in pores of the porous substrate, wherein in the porous substrate, the first part and the second part constitute a discontinuous phase and a continuous phase, respectively, and the affinity between the porous substrate and the polymer electrolyte is increased by controlling the content of the halogen-based compound in the porous substrate to 0.5 to 10 wt%, so that the impregnability, adhesion, and physical properties thereof of the polymer electrolyte for the porous substrate can be improved and implemented in a balanced manner.

The effect of the present invention is not limited to the above-described effects, and it should be understood to include all effects that can be inferred from the configurations described in the detailed description or claims of the present invention.

[Modes of the Invention]

Hereinafter, the present invention will be described. However, the present invention may be implemented in several different forms, and thus is not limited to the embodiments described herein.

Throughout the specification, when a part is "connected" to another part, this includes not only the case where they are "directly connected" but also the case where they are "indirectly connected" with another member interposed therebetween. In addition, when a part is said to "include" a component, this means that other components may be further included, not excluded, unless specifically stated otherwise.

One aspect of the present invention provides a polymer electrolyte membrane including: a porous substrate including a first part including a first polyolefin modified with a halogen-based compound, and a second part including a second polyolefin; and a halogen-based polymer electrolyte impregnated in pores of the porous substrate, wherein in the porous substrate, the first part and the second part constitute a discontinuous phase and a continuous phase, respectively, and a content of the halogen-based compound in the porous substrate is 0.5 to 10 wt%.

Conventional porous substrates made of only polyolefins are inherently hydrophobic, like fluorocarbons, but have hydrophobic side chains that are mutually discordant, making it difficult to ensure the compatibility of fluorocarbons. In this regard, by introducing polyolefins and a certain amount of halogen-based compound during the manufacture of the porous substrate, a certain affinity for the halogen-based polymer electrolyte can be imparted to the porous substrate. For example, by deriving, controlling, and combining the weight average molecular weight (Mw) of the first and second polyolefins, the dispersibility of the first and second parts in the porous substrate, the content of the halogen-based compound in the porous substrate, the type of the halogen-based compound, and the like, the productivity of the process for introducing the halogen-based compound into the porous substrate, the affinity between the porous substrate and the halogen-based polymer electrolyte, and the impregnability property resulting therefrom can be implemented in a balanced manner.

In the porous substrate, the first part and the second part may constitute a continuous phase and a discontinuous phase, respectively. In the porous substrate, the first part can be uniformly dispersed in a matrix formed of the second part to impart substantially uniform affinity for the polymer electrolyte to the entire area along the area and/or thickness direction of the porous substrate, and accordingly, the impregnability of the polymer electrolyte into the porous substrate can be improved.

The term "matrix" as used herein means a component that constitutes a continuous phase in a porous substrate containing two or more components. That is, in the porous substrate, the second region including the second polyolefin may be present as a continuous phase, and the first additional part including the first polyolefin modified with the halogen-based compound may be present as a discontinuous phase dispersed therein.

A content of the halogen-based compound introduced by the first polyolefin in the porous substrate may be 0.5 to 10 wt%, preferably 1 to 10 wt%, and more preferably 1 to 5 wt%. When the content of the halogen-based compound is less than 0.5 wt%, the impregnability of the polymer electrolyte may not be sufficiently implemented, and when the content exceeds 10 wt%, the impregnability may be further improved, but the mechanical properties and heat resistance of the porous substrate implemented through the second polyolefin may deteriorate. In addition, when the content of the halogen-based compound exceeds 10 wt%, the dispersibility of the first part may be lowered, such that the number of surface defects having a different brightness from the surrounding area on the surface of the porous substrate may increase, thereby deteriorating the appearance quality, and the resistance may rapidly change in a portion and/or region where the first part is randomly aggregated on the surface and/or inside of the porous substrate, which may adversely affect the electrochemical characteristics.

The halogen-based compound and the halogen-based polymer electrolyte may contain at least one common element. The term "common element" as used herein means that at least one element contained in the halogen-based compound and at least one element contained in the halogen-based polymer electrolyte are identical to each other. The common element may be at least one of fluorine (F), chlorine (Cl), bromine (Br), and iodine (I), and preferably, fluorine (F).

The halogen-based compound may be a fluorine-based compound (monomer) and/or a perfluorine-based compound (monomer) having a fluoro-carbon chain, preferably an alkene-based fluorocarbon, and more preferably an alkene-based perfluorocarbon such as (perfluoropropyl)ethylene, (perfluorobutyl)ethylene, and (perfluorohexyl)ethylene, but is not limited thereto.

The halogen-based polymer electrolyte may be a perfluorosulfonic acid-based polymer (or a perfluorosulfonic acid-based ionomer). As the perfluorosulfonic acid-based polymer (or perfluorosulfonic acid-based ionomer), various commercially available types may be applied.

The first and second polyolefins may be derived from the same type and quality of polyolefins, and in this case, the weight average molecular weight (Mw) of each of the first and second polyolefins may be 200,000 to 1,000,000. In a method of manufacturing a polymer electrolyte membrane according to one embodiment to be described below, the first polyolefin may be a product obtained by mixing a polyolefin, a halogen-based compound, an initiator, and a pore-forming agent and allowing the polyolefin, the halogen-based compound, the initiator, and the pore forming agent to react in situ, wherein a portion of the polyolefin is modified with the halogen-based compound, and the second polyolefin may be a remainder of the polyolefin remaining in an unreacted state after the reaction.

When the weight average molecular weight (Mw) of the polyolefin is less than 200,000, the melt viscosity becomes excessively low, resulting in extremely poor dispersibility of the pore-forming agent, and in particular, phase separation or layer separation may occur between the polyolefin and the pore-forming agent. When the Mw exceeds 1,000,000 g/mol, the melt viscosity becomes high, resulting in poor processability, which may cause uneven kneading during melt kneading.

The first and second polyolefins may each be derived from different types and/or different qualities of polyolefins, and in this case, the weight average molecular weight (Mw) of the first polyolefin may be 30,000 to 100,000, preferably, 50,000 to 100,000, and the weight average molecular weight (Mw) of the second polyolefin may be 200,000 to 1,000,000. In a method of manufacturing a polymer electrolyte membrane according to another embodiment to be described below, the first polyolefin may be used to manufacture a masterbatch for introducing the halogen-based compound into the porous substrate, and the second polyolefin may act as a dispersion medium mixed with the masterbatch to uniformly disperse the masterbatch and the halogen-based compound included therein.

When the weight average molecular weight of the first polyolefin is less than 30,000 g/mol, it is difficult to obtain the masterbatch used for manufacturing the porous substrate in the form of pellets due to the low molecular weight, and when the weight average molecular weight exceeds 100,000 g/mol, an excessive load is applied to equipment for manufacturing the porous substrate, such as a mixer, an extruder, and a T-die, thereby reducing processability, and thus causing a defect that lowers the surface quality of the porous substrate due to a side reaction between the first and second polyolefins, and such a defect may inhibit the mobility of ions, thereby lowering the electrochemical characteristics.

In addition, when the weight average molecular weight (Mw) of the second polyolefin is less than 200,000, the melt viscosity becomes excessively low, resulting in poor dispersibility of the pore-forming agent, and in particular, phase separation or layer separation may occur between the second polyolefin and the pore-forming agent. When the Mw exceeds 1,000,000 g/mol, the melt viscosity becomes high, resulting in poor processability, which may cause uneven kneading during melt kneading.

A ratio of the weight average molecular weight (Mw) of the first polyolefin to the weight average molecular weight (Mw) of the second polyolefin may be 0.001 to 0.2, preferably 0.01 to 0.2, and more preferably 0.1 to 0.2. When the ratio of the weight average molecular weight (Mw) of the first polyolefin to the weight average molecular weight (Mw) of the second polyolefin is outside the above range, the compatibility and dispersibility of the first and second parts may deteriorate, and thus the deviation in mechanical properties according to the area of the porous substrate may increase, thereby significantly reducing the reliability and reproducibility of the product.

The molecular weight distribution (Mw/Mn) of each of the first and second polyolefins may be 3 to 7. When the molecular weight distribution of the first and second polyolefins is less than 3, the dispersibility with the pore-forming agent may be lowered, thereby lowering the uniformity of the manufactured porous substrate, and when the molecular weight distribution is more than 7, the mechanical strength of the porous substrate and the polymer electrolyte membrane including the porous substrate may be lowered.

The first and second polyolefins may each include one selected from the group consisting of polyethylene, polypropylene, polybutylene, polymethylpentene, and combinations of two or more thereof, preferably at least one of polyethylene and polypropylene, and more preferably polyethylene, but are not limited thereto.

The polymer electrolyte membrane may satisfy at least one of the following conditions (i) to (v): (i) an ion exchange capacity (A) of 0.95 to 1.50 meq/g, preferably 0.95 to 1.30 meq/g, and more preferably 0.95 to 1.10 meq/g; (ii) an ionic conductivity (B) of 0.10 to 0.15 $S \cdot cm^{-1}$, preferably 0.11 to 0.14 $S \cdot cm^{-1}$, and more preferably, 0.11 to 0.13 $S \cdot cm^{-1}$, (iii) a water uptake of 25 to 35%, preferably 25 to 32%, and more preferably 25 to 30%, (iv) a ratio of ionic conductivity to ion exchange capacity (B/A) of 0.095 to 0.150 $S \cdot cm^{-1} \cdot meq^{-1} \cdot g$, preferably 0.100 to 0.130 $S \cdot cm^{-1} \cdot meq^{-1} \cdot g$, and more preferably, 0.110 to 0.130 $S \cdot cm^{-1} \cdot meq^{-1} \cdot g$; and (v) a thickness of 50 $\mu m$ or less, preferably 30 $\mu m$ or less, and more preferably 5 to 30 $\mu m$.

In particular, the ratio of ionic conductivity to ion exchange capacity (B/A) according to the above condition (iv) means ionic conductivity per ion exchange capacity. Various attempts have been made to independently measure and interpret the ion exchange capacity and ionic conductivity of conventional polymer electrolyte membranes (or ion exchange membranes) and independently improve each of them. These attempts were effective for thick-film polymer electrolyte membranes with a thickness of 50 $\mu m$ or more, but the validity of these measurements and interpretations is being diluted for the thin-film polymer electrolyte membrane with a thickness of 50 $\mu m$ or less, preferably 30 $\mu m$ or less, and more preferably 5 to 30 $\mu m$, which are being developed recently.

In this regard, the ratio of ionic conductivity to ion exchange capacity (B/A) according to the above condition (iv) may be an effective indicator for judging electrochemical characteristics based on the relationship and balance between the ion exchange capacity and ionic conductivity of the thin-film polymer electrolyte membrane.

Another aspect of the present invention provides a method of manufacturing the above-described polymer electrolyte membrane, including: (a) manufacturing a porous substrate including a first part including a first polyolefin modified with a halogen-based compound, and a second part including a second polyolefin; (b) dissolving a halogen-based polymer electrolyte in a solvent to prepare an electrolyte solution; and (c) impregnating the porous substrate with the electrolyte solution.

In step (a), a porous substrate including a first part including a first polyolefin modified with a halogen-based compound and a second part including a second polyolefin may be manufactured.

Step (a) may include (a1) reacting the halogen-based compound and the first polyolefin in the presence of an initiator to prepare a masterbatch; and (a2) processing a composition including the masterbatch, the second polyolefin, and a pore-forming agent to manufacture the porous substrate.

In step (a1), the halogen-based compound and the first polyolefin may be allowed to react in the presence of an initiator to prepare a masterbatch including a polymer in which the halogen-based compound is grafted onto the first polyolefin, and the usage amount and ratio of the reactants may be adjusted so that a content of the halogen-based compound in the porous substrate manufactured in the subsequent step is 0.5 to 10 wt%.

The initiator may be one selected from the group consisting of potassium persulfate, ammonium persulfate, acetylacetone peroxide, benzoyl peroxide, dicumyl peroxide, methane hydroperoxide, 2,4-dichlorobenzoyl peroxide, di-t-butyl peroxide, t-butyl peracetate, hydrogen peroxide, and combinations of two or more thereof, preferably a peroxide-based compound, and more preferably benzoyl peroxide, but is not limited thereto.

In step (a2), a composition including the masterbatch, the second polyolefin, and a pore-forming agent may be processed to manufacture the porous substrate. Specifically, the composition is melted, kneaded, and pressurized to manufacture a base sheet having a predetermined thickness, then the base sheet is stretched to manufacture a film, and the pore-forming agent is extracted and removed from the film to obtain the porous substrate. The composition may include 10 to 40 wt% of the masterbatch prepared in step (a1), 10 to 40 wt% of the second polyolefin, and 40 to 80 wt% of the pore-forming agent.

The pore-forming agent may be one selected from the group consisting of paraffin oil, paraffin wax, mineral oil, solid paraffin, soybean oil, rapeseed oil, palm oil, di-2-ethylhexyl phthalate, dibutyl phthalate, diisononyl phthalate, diisodecyl phthalate, bis(2-propylheptyl)phthalate, naphthenoyl, and a combination of two or more thereof, preferably paraffin oil, and more preferably paraffin oil having a kinematic viscosity of 50 to 100 cSt at 40 °C, but is not limited thereto.

The stretching may be accomplished by a known method, such as uniaxial stretching or biaxial stretching (sequential or simultaneous biaxial stretching). In the case of sequential biaxial stretching, the stretching magnification may be 4 to 20 times in the transverse direction (MD) and the machine direction (TD), and the area magnification accordingly may be 16 to 400 times.

Meanwhile, step (a) may include (a1') mixing a polyolefin, a halogen-based compound, an initiator, and a pore forming agent and allowing the polyolefin, the halogen-based compound, the initiator, and the pore forming agent to react in-situ to prepare a composition including the first polyolefin modified with the halogen-based compound as a portion of the polyolefin and the second polyolefin as a remainder of the polyolefin; and (a2') processing the composition to manufacture the porous substrate.

In step (a1'), a polyolefin, a halogen-based compound, and a pore-forming agent are melted and kneaded under the conditions of 150 to 300 °C and 50 to 300 rpm in the presence of an initiator, and at the same time, a portion of the polyolefin and the halogen-based compound are reacted to prepare a composition including the first polyolefin grafted with the halogen-based compound as a portion of the polyolefin and the second polyolefin as a remainder of the polyolefin, and the usage amount and ratio of the reactants may be adjusted so that a content of the halogen-based compound in the porous substrate manufactured in the subsequent step is 0.5 to 10 wt%.

Instead of separating the reaction step of the raw material and the initiator and the melting and kneading step as in the related art, the raw material and the initiator are melted and kneaded under predetermined conditions, thereby inducing grafting of the polyolefin and the halogen-based compound contained in the raw material by a free radical reaction, that is, inducing in-situ grafting of the polyolefin and the halogen-based compound.

In step (a2'), the composition may be processed to manufacture the porous substrate. Specifically, the composition is melted, kneaded, and pressurized to manufacture a base sheet having a predetermined thickness, and then the base sheet is stretched to manufacture a film, and the pore-forming agent is extracted and removed from the film to obtain the porous substrate.

In step (b), a halogen-based polymer electrolyte may be dissolved in a solvent to prepare an electrolyte solution.

A content of the halogen-based polymer electrolyte in the electrolyte solution may be 10 to 60 wt%. When the content of the halogen-based polymer electrolyte is less than 10 wt%, the amount of electrolyte impregnated into the pores of the porous substrate is small, which may lower the ionic conductivity of the polymer electrolyte membrane and make it difficult to increase the thickness of the polymer electrolyte membrane, and when the content exceeds 60 wt%, the solubility of the electrolyte decreases, making it difficult for the electrolyte to penetrate into the pores of the porous substrate, and the flowability of the electrolyte solution decreases, making it difficult to uniformize the thickness of the polymer electrolyte membrane.

The solvent of the electrolyte solution may be one selected from the group consisting of ester-based solvents, ether-based solvents, alcohol-based solvents, ketone-based solvents, amide-based solvents, sulfone-based solvents, carbonate-based solvents, aliphatic hydrocarbon-based solvents, aromatic hydrocarbon-based solvents, and combinations of two or more thereof, preferably amide-based solvents, and more preferably dimethylacetamide.

Examples of the amide-based solvents include, but are not limited to, N-methyl-2-pyrrolidone, 2-pyrrolidone, N-methylformamide, dimethylformamide, and dimethylacetamide.

Examples of the ester-based solvents include, but are not limited to, methyl acetate, ethyl acetate, n-butyl acetate, cellosolve acetate, propylene glycol monomethyl acetate, 3-methoxybutyl acetate, methyl butyrate, ethyl butyrate, and propyl propionate. Examples of the ether-based solvents include, but are not limited to, diethyl ether, dipropyl ether, dibutyl ether, butyl ethyl ether, tetrahydrofuran, ethylene glycol monomethyl ether, ethylene glycol monoethyl ether, ethylene glycol monobutyl ether, octyl ether, and hexyl ether.

Examples of the alcohol-based solvents include, but are not limited to, methanol, ethanol, propanol, isopropanol, n-butanol, amyl alcohol, cyclohexanol, octyl alcohol, and decanol. Examples of the ketone-based solvents include, but are not limited to, acetone, cyclohexanone, methyl amyl ketone, diisobutyl ketone, methyl ethyl ketone, and methyl isobutyl ketone. Examples of the carbonate-based solvents include, but are not limited to, ethylene carbonate, dimethyl carbonate, diethyl carbonate, methyl ethyl carbonate, propylene carbonate, ethylene carbonate, and dibutyl carbonate.

Examples of the sulfone-based solvents include, but are not limited to, dimethyl sulfoxide, diethyl sulfoxide, diethyl sulfone, and tetramethylene sulfone. Examples of the aliphatic hydrocarbon-based solvents include, but are not limited to, pentane, hexane, heptane, octane, nonane, decane, dodecane, tetradecane, hexadecane, and the like, and examples of the aromatic hydrocarbon-based solvents include, but are not limited to, benzene, ethylbenzene, chlorobenzene, toluene, xylene and the like.

In step (c), the porous substrate may be impregnated with the electrolyte solution and then dried to obtain the polymer electrolyte membrane. The impregnation (and/or coating) may be accomplished by (i) impregnating the porous substrate in an impregnation bath filled with the electrolyte solution for a predetermined period of time, (ii) coating the porous substrate with a coating device for delivering the electrolyte solution, such as a roll coater or bar coater, or a combination of (i) and (ii).

Hereinafter, examples of the present invention will be described in more detail.

Preparation Example 1

90 parts by weight of high-density polyethylene having a weight average molecular weight (Mw) of 50,000, 10 parts by weight of (perfluorohexyl) ethylene, and 0.3 parts by weight of benzoyl peroxide were put into a beaker, mixed at room temperature, then put into a rheomixer preheated to 190 °C and kneaded at 60 rpm for 4 minutes to produce a melt. The melt was manufactured in the form of a sheet at 60 °C using a roll press and then pelletized to prepare a masterbatch (MB1).

Preparation Example 2

A masterbatch (MB2) was manufactured in the same manner as in Preparation Example 1, except that the input amounts of the high-density polyethylene and (perfluorohexyl)ethylene were changed to 70 parts by weight and 30 parts by weight, respectively.

Preparation Example 3

A masterbatch (MB3) was manufactured in the same manner as in Preparation Example 1, except that the input amounts of the high-density polyethylene and (perfluorohexyl)ethylene were changed to 80 parts by weight and 20 parts by weight, respectively.

Preparation Example 4

A masterbatch (MB4) was manufactured in the same manner as in Preparation Example 1, except that the input amounts of the high-density polyethylene and (perfluorohexyl)ethylene were changed to 95 parts by weight and 5 parts by weight, respectively.

Preparation Example 5

A masterbatch (MB5) was manufactured in the same manner as in Preparation Example 1, except that the input amounts of the high-density polyethylene and (perfluorohexyl)ethylene were changed to 97 parts by weight and 3 parts by weight, respectively.

Preparation Example 6

A masterbatch (MB6) was manufactured in the same manner as in Preparation Example 1, except that the weight average molecular weight (Mw) of the high-density polyethylene was changed to 70,000.

Preparation Example 7

A masterbatch (MB7) was manufactured in the same manner as in Preparation Example 1, except that the weight average molecular weight (Mw) of the high-density polyethylene was changed to 100,000.

Comparative Preparation Example 1

A masterbatch (MB8) was manufactured in the same manner as in Preparation Example 1, except that the input amounts of the high-density polyethylene and (perfluorohexyl)ethylene were changed to 65 parts by weight and 35 parts by weight, respectively.

Comparative Preparation Example 2

A masterbatch (MB9) was manufactured in the same manner as in Preparation Example 1, except that the input amounts of the high-density polyethylene and the (perfluorohexyl)ethylene were changed to 99 parts by weight and 1 part by weight, respectively.

Example 1

20 parts by weight of high-density polyethylene having a weight average molecular weight (Mw) of 600,000, 70 parts by weight of paraffin oil having a kinematic viscosity of 70 cSt at 40 °C, and 10 parts by weight of MB1 according to Preparation Example 1 were put into a beaker, mixed at room temperature, then put into a rheomixer preheated to 190 °C and kneaded at 60 rpm for 4 minutes to produce a melt. The melt was passed through a casting roll having a temperature of 60 °C to produce a base sheet.

The base sheet was stretched 8 times in the machine direction (MD) in a 123 °C roll stretcher and stretched 8 times in the transverse direction (TD) in a 123 °C tenter stretcher to manufacture a film. The film was immersed in a dichloromethane leaching bath at 25 °C to extract and remove paraffin oil for 1 minute, and then dried at room temperature for 5 minutes to manufacture a porous substrate.

A perfluorosulfonic acid-based polymer (equivalent weight, EW 700 or higher) was dissolved in dimethylacetamide to prepare an electrolyte solution having a perfluorosulfonic acid-based polymer concentration of 30 wt%. After impregnating the electrolyte solution into the porous substrate, the solvent was evaporated at 100 °C for 10 minutes, and the impregnated porous substrate was dried at 120 °C for 10 minutes to manufacture an electrolyte membrane with a thickness of $30\pm2$ $\mu$m. The thickness of the electrolyte membrane was measured using a micro-thickness measuring instrument.

Example 2

An electrolyte membrane was manufactured in the same manner as in Example 1, except that a masterbatch applied in the manufacture of a porous substrate was changed from MB1 to MB2 according to Preparation Example 2.

Example 3

An electrolyte membrane was manufactured in the same manner as in Example 1, except that a masterbatch applied in the manufacture of a porous substrate was changed from MB1 to MB3 according to Preparation Example 3.

Example 4

An electrolyte membrane was manufactured in the same manner as in Example 1, except that a masterbatch applied in the manufacture of a porous substrate was changed from MB1 to MB4 according to Preparation Example 4.

Example 5

An electrolyte membrane was manufactured in the same manner as in Example 1, except that a masterbatch applied in the manufacture of a porous substrate was changed from MB1 to MB5 according to Preparation Example 5.

Example 6

An electrolyte membrane was manufactured in the same manner as in Example 1, except that a masterbatch applied in the manufacture of a porous substrate was changed from MB1 to MB6 according to Preparation Example 6.

Example 7

An electrolyte membrane was manufactured in the same manner as in Example 1, except that a masterbatch applied in the manufacture of a porous substrate was changed from MB1 to MB7 according to Preparation Example 7.

Example 8

28.7 parts by weight of high-density polyethylene having a weight average molecular weight (Mw) of 600,000, 1 part by weight of (perfluorohexyl)ethylene, 0.3 part by weight of benzoyl peroxide, and 70 parts by weight of paraffin oil having a kinematic viscosity of 70 cSt at 40 °C were put into a beaker, mixed at room temperature, then put into a rheomixer preheated to 190 °C and kneaded at 60 rpm for 4 minutes to produce a melt. The melt was passed through a casting roll having a temperature of 60 °C to produce a base sheet.

The base sheet was stretched 8 times in the machine direction (MD) in a 123 °C roll stretcher, and stretched 8 times in the transverse direction (TD) in a 123 °C tenter stretcher to manufacture a film. The film was immersed in a dichloromethane leaching bath at 25 °C to extract and remove paraffin oil for 1 minute, and then dried at room temperature for 5 minutes to manufacture a porous substrate.

A perfluorosulfonic acid-based polymer (equivalent weight, EW 700 or higher) was dissolved in dimethylacetamide to prepare an electrolyte solution having a perfluorosulfonic acid-based polymer concentration of 30 wt%. After impregnating the electrolyte solution into the porous substrate, the solvent was evaporated at 100 °C for 10 minutes, and the impregnated porous substrate was dried at 120 °C for 10 minutes to manufacture an electrolyte membrane with a thickness of $30\pm2$ μm.

Comparative Example 1

An electrolyte membrane was manufactured in the same manner as in Example 1, except that a masterbatch applied in the manufacture of a porous substrate was changed from MB1 to MB8 according to Comparative Preparation Example 1.

Comparative Example 2

An electrolyte membrane was manufactured in the same manner as in Example 1, except that a masterbatch applied in the manufacture of a porous substrate was changed from MB1 to MB9 according to Comparative Preparation Example 2.

Comparative Example 3

30 parts by weight of high-density polyethylene having a weight average molecular weight (Mw) of 600,000 and 70 parts by weight of paraffin oil having a kinematic viscosity of 70 cSt at 40 °C were put into a beaker, mixed at room temperature, then put into a rheomixer preheated to 190 °C and kneaded at 60 rpm for 4 minutes to produce a melt. The melt was passed through a casting roll having a temperature of 60 °C to produce a base sheet.

The base sheet was stretched 8 times in the machine direction (MD) in a 123 °C roll stretcher and stretched 8 times in the transverse direction (TD) in a 123 °C tenter stretcher to manufacture a film. The film was immersed in a dichloromethane leaching bath at 25 °C to extract and remove paraffin oil for 1 minute, and then dried at room temperature for 5 minutes to manufacture a porous substrate.

A perfluorosulfonic acid-based polymer (equivalent weight, EW 700 or higher) was dissolved in dimethylacetamide to prepare an electrolyte solution having a perfluorosulfonic acid-based polymer concentration of 30 wt%. After impregnating the electrolyte solution into the porous substrate, the solvent was evaporated at 100 °C for 10 minutes, and the impregnated porous substrate was dried at 120 °C for 10 minutes to manufacture an electrolyte membrane with a thickness of $30\pm2$ μm.

Experimental Example 1

The air permeability of the porous substrates according to the above examples and comparative examples was measured by the following method, and the results are shown in Table 1 below.

- Air permeability (Gurley, sec/100cc): The time required for 100 ml of air to pass through a porous substrate specimen with a diameter of 29.8 mm at a measurement pressure of 0.025 MPa was measured using Asahi Seiko's Gurley meter (densometer) EGO2-5 model,

[Table 1]

| Classification | Air permeability (sec/100cc) |
|---|---|
| Example 1 | 110 |
| Example 2 | 154 |
| Example 3 | 136 |
| Example 4 | 98 |
| Example 5 | 82 |
| Example 6 | 95 |
| Example 7 | 70 |
| Example 8 | 52 |
| Comparative Example 1 | 166 |

(continued)

| Classification | Air permeability (sec/100cc) |
|---|---|
| Comparative Example 2 | 58 |
| Comparative Example 3 | 50 |

Experimental Example 2

The properties of the electrolyte membranes according to the above examples and comparative examples were measured by the following methods, and the results are shown in Table 2 below.

(1) Ion exchange capacity

The electrolyte membrane was immersed in a 1.5 M $H_2SO_4$ aqueous solution for 24 hours to exchange the counter ions of the electrolyte membrane with H+ groups, then washed with ultrapure water, and dried in a vacuum oven at 80 °C for 24 hours, and the weight was measured. The dried electrolyte membrane was immersed in a 3 M NaCl aqueous solution to exchange the counter ions of the electrolyte membrane with $Na^+$, and the 3 M NaCl aqueous solution containing some H+ was titrated with a 0.01 M NaOH solution, and the ion exchange capacity was calculated according to Equation 1 below.

$$<\text{Equation 1}> \text{Ion exchange capacity } (meq/g_{dry}) = (V_{NaOH} * C_{NaOH}) / W_{dry}$$

In Equation 1, $W_{dry}$ is the weight of the dried electrolyte membrane, $V_{NaOH}$ is the volume of NaOH solution used for titration, and $C_{NaOH}$ is the concentration of the NaOH solution.

(2) Ionic conductivity

An electrolyte membrane was cut into 1 cm x 3 cm pieces, and then mounted in a conductivity measurement cell with a platinum electrode. The measurement cell was immersed in ultrapure water at 25 °C, and then the resistance of the electrolyte membrane was measured using a measuring instrument (Bio-Logic VSP300 equipped with an impedance module) under conditions of 100% relative humidity (RH), and the ionic conductivity was calculated according to Equation 2 below.

$$<\text{Equation 2}> \text{Ionic conductivity } (S \cdot cm^{-1}) = t / (R * A)$$

In Equation 2, R ($\Omega$) is the resistance of the electrolyte membrane, A ($cm^2$) is the area of the electrode, and t (cm) is the thickness of the electrolyte membrane.

(3) Water uptake

The electrolyte membrane was cut into 2 cm x 2 cm pieces, then dried in a vacuum oven at 80 °C for 24 hours, and the weight of the dried electrolyte membrane was measured using a scale. The electrolyte membrane was immersed in ultrapure water and then allowed to swell for 24 hours, so that moisture on the surface of the electrolyte membrane was removed, and the weight of the wet electrolyte membrane was measured to calculate the water uptake according to Equation 3 below.

$$<\text{Equation 3}> \text{WU } (\%) = (W_{wet} - W_{dry}) / (W_{dry}) * 100$$

In Equation 3, $W_{dry}$ is the weight of the dry electrolyte membrane, and $W_{wet}$ is the weight of the wet electrolyte membrane.

[Table 2]

| Classification | Ion exchange capacity (A) | Ionic conductivity (B) | Water uptake (C) | B/A |
|---|---|---|---|---|
| Example 1 | 1.08 | 0.120 | 27.50 | 0.111 |

(continued)

| Classification | Ion exchange capacity (A) | Ionic conductivity (B) | Water uptake (C) | B/A |
|---|---|---|---|---|
| Example 2 | 1.34 | 0.135 | 33.04 | 0.101 |
| Example 3 | 1.28 | 0.131 | 31.37 | 0.102 |
| Example 4 | 1.06 | 0.118 | 26.46 | 0.111 |
| Example 5 | 1.01 | 0.113 | 25.52 | 0.112 |
| Example 6 | 0.98 | 0.117 | 26.68 | 0.119 |
| Example 7 | 0.95 | 0.110 | 25.91 | 0.115 |
| Example 8 | 1.11 | 0.105 | 30.60 | 0.095 |
| Comparative Example 1 | 1.51 | 0.138 | 35.25 | 0.091 |
| Comparative Example 2 | 0.94 | 0.102 | 24.92 | 0.109 |
| Comparative Example 3 | 1.42 | 0.075 | 20.23 | 0.053 |

The foregoing description of the present invention is intended to be illustrative, and it will be understood by those skilled in the art that embodiments may be easily modified into other specific forms without changing the technical spirit and essential characteristics of the invention. Therefore, it should be understood that the embodiments described above are illustrative in all respects and not restrictive. For example, each component described as a single type may be implemented in a distributed form, and likewise components described as distributed may be implemented in a combined form.

The scope of the present invention is indicated by the following claims, and all changes or modifications derived from the meaning and scope of the claims and their equivalents should be construed as being included in the scope of the present invention.

**Claims**

1. A polymer electrolyte membrane comprising:

   a porous substrate including a first part including a first polyolefin modified with a halogen-based compound, and a second part including a second polyolefin; and
   a halogen-based polymer electrolyte impregnated in pores of the porous substrate,
   wherein in the porous substrate, the first part and the second part constitute a discontinuous phase and a continuous phase, respectively, and
   a content of the halogen-based compound in the porous substrate is 0.5 to 10 wt%.

2. The polymer electrolyte membrane of claim 1, wherein the halogen-based compound and the halogen-based polymer electrolyte contain at least one common element.

3. The polymer electrolyte membrane of claim 2, wherein the common element is fluorine (F).

4. The polymer electrolyte membrane of claim 3, wherein the halogen-based compound is an alkene-based fluorocarbon.

5. The polymer electrolyte membrane of claim 3, wherein the halogen-based polymer electrolyte is a perfluorosulfonic acid-based polymer.

6. The polymer electrolyte membrane of claim 1, wherein a weight average molecular weight (Mw) of each of the first and second polyolefins is 200,000 to 1,000,000.

7. The polymer electrolyte membrane of claim 1, wherein a weight average molecular weight (Mw) of the first polyolefin is 30,000 to 100,000, and
   a weight average molecular weight (Mw) of the second polyolefin is 200,000 to 1,000,000.

**EP 4 583 212 A1**

8. The polymer electrolyte membrane of claim 1, wherein the first and second polyolefins each include one selected from the group consisting of polyethylene, polypropylene, polybutylene, polymethylpentene, and combinations of two or more thereof.

9. The polymer electrolyte membrane of claim 1, wherein at least one of the following conditions (i) to (v) is satisfied:

   (i) an ion exchange capacity (A) of 0.95 to 1.50 meq/g;
   (ii) an ionic conductivity (B) of 0.10 to 0.15 $S \cdot cm^{-1}$;
   (iii) a water uptake of 25 to 35%;
   (iv) a ratio of ionic conductivity to ion exchange capacity (B/A) of 0.095 to 0.150 $S \cdot cm^{-1} \cdot meq^{-1} \cdot g$; and
   (v) a thickness of 50 $\mu$m or less.

10. A method of manufacturing the polymer electrolyte membrane of any one of claims 1 to 9, the method comprising:

   (a) manufacturing a porous substrate including a first part including a first polyolefin modified with a halogen-based compound, and a second part including a second polyolefin;
   (b) dissolving a halogen-based polymer electrolyte in a solvent to prepare an electrolyte solution; and
   (c) impregnating the porous substrate with the electrolyte solution.

11. The method of claim 10, wherein step (a) includes:

   (a1) reacting the halogen-based compound and the first polyolefin in the presence of an initiator to prepare a masterbatch; and
   (a2) processing a composition including the masterbatch, the second polyolefin, and a pore-forming agent to manufacture the porous substrate.

12. The method of claim 10, wherein step (a) includes:

   (a1') mixing a polyolefin, a halogen-based compound, an initiator, and a pore forming agent and allowing the polyolefin, the halogen-based compound, the initiator, and the pore forming agent to react in-situ to prepare a composition including the first polyolefin modified with the halogen-based compound as a portion of the polyolefin and the second polyolefin as a remainder of the polyolefin; and
   (a2') processing the composition to manufacture the porous substrate.

## INTERNATIONAL SEARCH REPORT

| International application No. |
| --- |
| **PCT/KR2023/020437** |

### A. CLASSIFICATION OF SUBJECT MATTER

**H01M 8/106**(2016.01)i; **H01M 8/1039**(2016.01)i; **H01M 8/1067**(2016.01)i; **H01M 8/1081**(2016.01)i; **H01M 8/18**(2006.01)i; **H01M 8/10**(2006.01)i

According to International Patent Classification (IPC) or to both national classification and IPC

### B. FIELDS SEARCHED

Minimum documentation searched (classification system followed by classification symbols)

H01M 8/106(2016.01); C08J 5/22(2006.01); H01M 10/40(2006.01); H01M 4/08(2006.01); H01M 8/10(2006.01); H01M 8/1053(2016.01); H01M 8/1062(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전해질막(electrolyte membrane), 폴리올레핀(polyolefin), 할로겐계 화합물 (halogenated compounds), 다공성 기재(porous substrate)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2020-0036231 A (W-SCOPE KOREA CO., LTD.) 07 April 2020 (2020-04-07)<br>See claims 1, 10 and 14. | 1-12 |
| A | US 2019-0267655 A1 (TOKYO INSTITUTE OF TECHNOLOGY et al.) 29 August 2019 (2019-08-29)<br>See entire document. | 1-12 |
| A | US 2006-0014067 A1 (HEDHLI, Lotfi et al.) 19 January 2006 (2006-01-19)<br>See entire document. | 1-12 |
| A | US 2009-0297909 A1 (YAMAMOTO, Kazushige et al.) 03 December 2009 (2009-12-03)<br>See entire document. | 1-12 |
| A | KR 10-0601996 B1 (SAMSUNG SDI CO., LTD. et al.) 18 July 2006 (2006-07-18)<br>See entire document. | 1-12 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **20 March 2024** | **22 March 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 583 212 A1

## INTERNATIONAL SEARCH REPORT
### Information on patent family members

International application No.

**PCT/KR2023/020437**

| Patent document cited in search report | | | Publication date (day/month/year) | Patent family member(s) | | | Publication date (day/month/year) |
|---|---|---|---|---|---|---|---|
| KR | 10-2020-0036231 | A | 07 April 2020 | KR | 10-2191140 | B1 | 16 December 2020 |
| US | 2019-0267655 | A1 | 29 August 2019 | CN | 109476871 | A | 15 March 2019 |
| | | | | EP | 3490044 | A1 | 29 May 2019 |
| | | | | EP | 3490044 | A4 | 25 December 2019 |
| | | | | EP | 4279638 | A2 | 22 November 2023 |
| | | | | JP | 6328355 | B1 | 23 May 2018 |
| | | | | KR | 10-2019-0022657 | A | 06 March 2019 |
| | | | | KR | 10-2262297 | B1 | 07 June 2021 |
| | | | | US | 11276871 | B2 | 15 March 2022 |
| | | | | WO | 2018-020826 | A1 | 01 February 2018 |
| US | 2006-0014067 | A1 | 19 January 2006 | CN | 101036247 | A | 12 September 2007 |
| | | | | EP | 1794823 | A2 | 13 June 2007 |
| | | | | EP | 1794823 | A4 | 16 December 2009 |
| | | | | EP | 1794823 | B1 | 22 February 2012 |
| | | | | JP | 2008-507087 | A | 06 March 2008 |
| | | | | KR | 10-2007-0035035 | A | 29 March 2007 |
| | | | | US | 8039160 | B2 | 18 October 2011 |
| | | | | WO | 2006-019508 | A2 | 23 February 2006 |
| | | | | WO | 2006-019508 | A3 | 19 April 2007 |
| US | 2009-0297909 | A1 | 03 December 2009 | CN | 101069313 | A | 07 November 2007 |
| | | | | CN | 101069313 | B | 04 April 2012 |
| | | | | CN | 101656318 | A | 24 February 2010 |
| | | | | EP | 1833111 | A1 | 12 September 2007 |
| | | | | EP | 1833111 | A4 | 17 March 2010 |
| | | | | JP | 2006-216531 | A | 17 August 2006 |
| | | | | KR | 10-2007-0086373 | A | 27 August 2007 |
| | | | | US | 7785751 | B2 | 31 August 2010 |
| | | | | WO | 2006-059582 | A1 | 08 June 2006 |
| KR | 10-0601996 | B1 | 18 July 2006 | JP | 2006-073456 | A | 16 March 2006 |
| | | | | JP | 5048209 | B2 | 17 October 2012 |
| | | | | KR | 10-2006-0043700 | A | 15 May 2006 |
| | | | | US | 2006-0051648 | A1 | 09 March 2006 |

Form PCT/ISA/210 (patent family annex) (July 2022)